**Europäisches Patentamt**

**European Patent Office**

**Office européen des brevets**

(19)

(11) Numéro de publication : **0 077 733**
**B1**

(12)

# FASCICULE DE BREVET EUROPÉEN

(45) Date de publication du fascicule du brevet :
**18.06.86**

(51) Int. Cl.⁴ : **B 29 D 3/02**

(21) Numéro de dépôt : **82401904.6**

(22) Date de dépôt : **18.10.82**

(54) **Procédé de préparation de matériaux composés de fibres de carbone et d'une matière thermoplastique, lesdits matériaux et leurs applications.**

(30) Priorité : 21.10.81 FR 8119766

(43) Date de publication de la demande :
27.04.83 Bulletin 83/17

(45) Mention de la délivrance du brevet :
18.06.86 Bulletin 86/25

(84) Etats contractants désignés :
AT BE CH DE FR GB IT LI LU NL

(56) Documents cités :
DE-A- 1 919 887
GB-A- 1 251 641
US-A- 3 553 003
US-A- 3 965 858
KUNSTSTOFFE, vol. 68, no. 6, juin 1978, pages 331-334, Munich (DE); R. KEUERLEBER: "Kohlenstoffaserverstärkte Thermoplaste"

(73) Titulaire : **GROUPE DE RECHERCHE ET D'ANIMATION POUR LE DEVELOPPEMENT, L'INNOVATION et L'ENSEIGNEMENT ET TECHNOLOGIE G.R.A.D.I.E.N.T.**
**Centre Royalieu BP 233**
**F-60 206 Compiegne (FR)**

(72) Inventeur : **de Charentenay, François-Xavier**
**41 rue St Lazare**
**F-60200 Compiegne (FR)**

(74) Mandataire : **Combe, André**
**CABINET BEAU DE LOMENIE 55 rue d'Amsterdam**
**F-75008 Paris (FR)**

Jouve, 18, rue St-Denis, 75001 Paris, France

EP 0 077 733 B1

# 0 077 733

## Description

La présente invention concerne un procédé de préparation de matériaux composés de fibres de carbone et d'une matière thermoplastique ; elle concerne également ledit matériau et ses applications.

Le revêtement de fibres inorganiques de renforcement peut être réalisé par des procédés chimiques de dépôt en phase vapeur, comme décrit dans le brevet US-A-3,553,003.

Le procédé selon l'invention est un procédé mettant en œuvre un lit fluidisé de particules de matières thermoplastique.

Les fibres de carbone sont connues et leur utilisation en tant que fibres de renforcement a été souvent décrite. Cependant, la réalisation d'un matériau composite à base de fibres de carbone et d'une matière thermoplastique pose un certain nombre de problèmes venant de ce qu'un mélange direct de ces deux ingrédients entraîne très généralement, du fait de la viscosité du milieu, une rupture exagérée des fibres de carbone et, par conséquent, une perte des propriétés renforçantes potentielles de ces fibres dans le matériau fini. De nombreux procédés décrits, tel celui dans le brevet GB-A-1 251 641, conduisent ainsi à l'obtention de matériaux thermoplastiques contenant des fibres courtes.

La présente invention vise un procédé pour réaliser des matériaux composites formés de fibres longues de carbone et d'une matière thermoplastique ; elle vise par conséquent, en tant que produits, des matériaux solides, de forme allongée, composés de fibres longues de carbone orientées et d'une matière thermoplastique, matériaux dénommés également mèches imprégnées.

Le matériau préparé selon le procédé de l'invention présente la composition suivante :
— il est composé de fibres longues de carbone orientées et d'une matière thermoplastique emplissant la totalité de l'espace entre lesdites fibres de carbone,
— il comporte de 20 à 65 % en volume de fibres de carbone se présentant sous forme d'une mèche de fibres de carbone, et
— il présente une épaisseur inférieure à environ 5 mm.

Les fibres de carbone utilisables dans la présente invention sont des matériaux connus se présentant sous forme d'une nappe d'une mèche (ou d'un cordon) dans laquelle les fibres élémentaires sont sensiblement disposées orientées dans le sens de la longueur. Ces fibres sont dites longues car elles ont une longueur supérieure à environ 10 mm et de préférence supérieure à 25 mm ; elles sont formées d'une juxtaposition de nombreux filaments élémentaires à savoir environ 3 000 à environ 12 000 filaments pour des fibres présentant des sections droites comprises entre environ 0,1 et environ 0,5 mm$^2$.

Par matière thermoplastique, on entend tout matériau fusible à chaud selon un phénomène réversible. Ces matières thermoplastiques sont différentes des matériaux que l'on a déjà préconisés pour réaliser des produits composites à base de fibres (de verre ou de carbone), ces matériaux se présentant généralement sous forme de prépolymères liquides utilisés sous cette forme pour enduire les fibres, ces prépolymères étant ultérieurement soumis, après mise en forme éventuelle, à une polymérisation finale pour donner naissance à des matériaux thermodurcis. Les matières thermoplastiques utilisables selon la présente invention sont les polyoléfines, les polyamides, les polyesters thermoplastiques, les polysulfones, etc. Parmi ces matières thermoplastiques, on utilisera de préférence les thermoplastiques dits techniques (en langue anglaise engineering thermoplastics) qui présentent déjà en eux-mêmes des propriétés mécaniques suffisantes pour être utilisés dans la réalisation de pièces industrielles devant supporter certains efforts.

La nature thermoplastique du matériau utilisé implique que ce matériau peut être fondu ou au moins fortement ramolli au contact de la fibre de carbone sans se décomposer et perdre ainsi ses propriétés mécaniques intrinsèques.

Dans le matériau préparé selon le procédé de l'invention, la matière thermoplastique emplit la totalité des « vides » qui existent entre les fibres élémentaires des fibres de carbone. Le matériau final, examiné en coupe transversale, ne présente aucun « trou ». Lorsque la matière thermoplastique emplit seulement les vides entres les « fibres élémentaires » de la mèche de carbone, le matériau final est constitué d'environ 40 à 60 % en volume de fibres de carbone et de 40 à 60 % en volume de matière thermoplastique. Mais il est également possible selon la présente invention d'utiliser un excès de matière thermoplastique par rapport à la quantité de matière nécessaire pour remplir les vides dans la fibre de départ ; on obtient alors non seulement ce remplissage entre fibres élémentaires, mais un enrobage total du produit (couche de matière thermoplastique entourant la fibre), de sorte que, dans le produit final, la proportion en volume des fibres de carbone pourra descendre jusque vers environ 20 %.

Les nouveaux matériaux préparés selon le procédé de l'invention ont nécessairement une épaisseur faible, inférieure à 5 mm environ de façon à présenter une structure exempte de « trous » ou « vides ». Par contre leurs autres dimensions sont quelconques c'est-à-dire que l'on peut avoir des matériaux formant un jonc de forme allongée ou une plaque. Les matériaux préparés selon le procédé de l'invention présentent notamment la forme d'un jonc rigide lorsque l'on utilise, comme cela est souvent le cas, comme matériau de départ une fibre de carbone (en forme de mèche ou de cordon) présentant elle-même une forme allongée. Il est clair toutefois que, d'une part, la forme de la section droite de ce matériau pourra être quelconque (ronde, ovale, rectangulaire ou creuse dans le cas de tubes minces) selon la forme de la mèche de carbone utilisée et, d'autre part, le matériau selon l'invention pourra subir, avant commercialisation, une transformation de forme comme, par exemple, l'assemblage de plusieurs plaquettes élémentaires ou au contraire un fractionnement pour donner naissance à des granulés.

La présente invention concerne donc un procédé mettant en jeu un lit fluidisé de particules de matière thermoplastique en vue de préparer des mèches de fibres de carbone imprégnées de ladite matière thermoplastique, précurseur de matériaux composites ; lesdites mèches imprégnées étant d'une épaisseur inférieure à 5 mm, composées de 20 à 65 % en volume de fibres de carbone orientées et de ladite matière thermoplastique emplissant la totalité de l'espace entre les fibres, dans lequel :

— Après introduction dans ledit lit fluidisé de particules de matière thermoplastique, lesdites fibres de carbone, tendues entre deux contacts électriques, sont chauffées par Effet Joule, pendant une durée d'environ 0,5 à 60 s, à une température au moins égale à la température de collage de la matière thermoplastique,

— puis, lesdites fibres de carbone, revêtues de la matière thermoplastique sont sorties dudit lit fluidisé et soumises à un second chauffage par Effet Joule pendant une durée d'environ 0,10 à 60 s, à une température de l'ordre de grandeur de la température de fusion de la matière thermoplastique.

On notera que le procédé peut être mis en œuvre en continu ou en discontinu.

La première opération consiste à réaliser un lit fluidisé de particules de la matière thermoplastique que l'on veut utiliser. Pour ce lit, on tiendra compte des règles industrielles connues permettant de réaliser un lit fluidisé à l'aide de particules présentant des caractéristiques (notamment densité et granulométrie) déterminées. Il a été constaté que des paramètres tels que la densité du lit et/ou la taille des particules n'avaient pas une importance essentielle dans le cadre du procédé de l'invention. Il est parfois avantageux d'utiliser un lit fluidisé dont les particules sont à une certaine température, cette température devant bien évidemment rester nettement inférieure à celle à laquelle les particules ont tendance à coller entre elles ou sur les parois du réacteur.

Lorsque l'on a réalisé ce lit fluidisé de particules, on y introduit les fibres de carbone que l'on va chauffer in situ, par Effet Joule ; le carbone étant conducteur. Pour la mise en œuvre pratique d'un tel chauffage, les fibres de carbone sont tendues entre deux contacts électriques.

Ce chauffage doit être réalisé de façon convenable, cette façon pouvant être déterminée dans chaque cas en tenant compte des paramètres suivants :

— La température des fibres doit être supérieure à une température dite température de collage qui paraît spécifique de chaque matière plastique. Cette température de collage est nécessairement nettement inférieure à la température de fusion de la matière plastique (le mot fusion étant employé dans un sens large puisque les matières plastiques utilisées peuvent fondre ou se ramollir ou se plastifier) et supérieure à la température de transition vitreuse de la matière plastique.

Il n'existe pas de critère permettant de déterminer avec précision cette température de collage si ce n'est une série d'essais pratiques. Les matières plastiques utilisées dans les essais ont permis de constater que cette température de collage se situerait à une température d'environ 100 à 120 °C inférieure à la température de fusion cristalline de cette matière plastique.

— La durée de séjour des fibres, convenablement chauffées, dans le lit ; cette durée dépend de la quantité de matière thermoplastique que l'on veut déposer sur les fibres, de la température de ces fibres et de la température du lit fluidisé ; dans les expériences courantes, il a été trouvé que cette durée du séjour se situe entre 0,5 s et 60 s ; bien évidemment, toutes choses égales par ailleurs, la quantité de matière déposée augmente au fur et à mesure que cette durée augmente.

Les fibres de carbone sortant du lit fluidisé, revêtues d'une quantité convenable de matière thermoplastique, sont ensuite soumises à un nouveau chauffage par Effet Joule qui assure une diffusion convenable de la matière thermoplastique dans tous les espaces intersticiels situés entre les fibres élémentaires et qui, éventuellement, parfait l'aspect de surface du matériau fini. Le chauffage par Effet Joule, impliquant un dégagement de calories à partir des fibres de carbone même, permet ladite diffusion convenable de la matière thermoplastique. Les conditions de ce chauffage seront variables selon les matériaux ; il conviendra que la température des fibres soit de l'ordre de grandeur de la température de fusion de la matière thermoplastique et qu'une durée suffisante de chauffage, de l'ordre de 0,1 à 60 s, soit respectée.

Le matériau obtenu est alors refroidi et coupé à longueur désirable.

Ces matériaux peuvent être utilisés sous forme de joncs comme éléments de renfort par exemple, sous forme de plaques par soudure entre eux de matériaux à section rectangulaire disposés côte à côte ou en superposition (fibres parallèles ou perpendiculaires ou multidirectionnelles) ou ils peuvent être découpés pour donner naissance à des granulés qui seront transformés selon les techniques (par exemple injection) des matières plastiques.

L'exemple non limitatif suivant illustre l'invention.

a) on a utilisé comme matériaux de départ :

— une fibre de carbone formée d'environ 3 000 filaments présentant chacun un diamètre de l'ordre de 7 microns ; la fibre qui comporte 95 % de carbone et présente une conductibilité électrique de 165 Ω/m (à 20 °C) à une section droite de surface 0,11 mm$^2$ ;

— une matière thermoplastique qui est un polyamide 11 de densité 1,04, de température de fusion 186 °C ;

cette matière est utilisée sous forme d'une poudre dont le diamètre moyen des particules est de l'ordre de 160 microns ;

3

b) la matière thermoplastique en poudre a été mise sous forme d'un lit fluidisé dans un réacteur ; et en utilisant un débit d'air convenable ;

c) la fibre de carbone (de quarante centimètres de longueur) est tendue entre deux contacts électriques ; cette fibre est plongée dans le lit fluidisé et on alimente la fibre en courant électrique pendant une durée déterminée ; le courant électrique est choisi de façon à amener la température de la fibre à une valeur déterminée grâce à un étalonnage préalable ;

d) après avoir interrompu le courant de chauffage, on sort la fibre du lit fluidisé et on la soumet à un nouveau chauffage par mise sous courant électrique ; lors de ce nouveau chauffage on a utilisé un courant qui devrait porter la température des fibres à au moins environ 190 °C (voltage 50 V et intensité 0,60 A), pendant une durée de l'ordre de 15 secondes. Dans ces conditions le polyamide qui s'est déposé sur les fibres pendant l'opération c) a pu diffuser à l'intérieur de la mèche pour constituer un matériau exempt de « vides ».

On a rapporté dans le tableau ci-dessous les conditions opératoires et les résultats obtenus dans divers essais.

Dans ce tableau on a indiqué :
— le numéro de l'échantillon,
— les conditions opératoires utilisées dans l'opération c) ci-dessus (passage de la fibre, chauffée par effet Joule, dans le lit fluidisé de particules de polyamide). Ces conditions sont d'une part, le voltage v (en volts) assuré entre les extrémités de la fibre lors de son passage dans le lit fluidisé et d'autre part, le temps (en secondes) de séjour de la fibre dans ledit lit,
— les conditions opératoires utilisées dans l'opération d) ci-dessus. Ces conditions sont également le voltage (en volt) assuré entre les extrémités de la fibre (dans ce cas en effet le chauffage a également été réalisé par effet Joule) et le temps (en seconde) de chauffage,
— et le résultat obtenu exprimé en % en volume de fibres de carbone dans le produit final de l'invention.

L'exemple ci-dessus décrit des essais réalisés en discontinu mais, comme indiqué précédemment, le spécialiste pourra aisément transformer cette technique pour la rendre continue et l'automatiser.

| Echantillon | Enrobage (c) | | Recuit (d) | | Fibre de carbone |
|---|---|---|---|---|---|
| n° | U (en V) | Temps (en s) | U (en V) | Temps (en s) | % volume |
| 1 | 45 | 16 | 45 | 16 | 62 |
| 2 | 45 | 30 | 45 | 30 | 56 |
| 3 | 50 | 14 | 50 | 14 | 62 |
| 4 | 55 | 14 | 55 | 14 | 46 |
| 5 | 57 | 6 | 57 | 6 | 54 |
| 6 | 55 | 4,5 | 55 | 4,5 | 53 |
| 7 | 60 | 4 | 60 | 4 | 39 |
| 8 | 50 | 16 | 50 | 16 | 32 |
| 11 | 45 | 9 | 45 | 9 | 76 |
| 12 | 50 | 9 | 50 | 9 | 59 |
| 13 | 50 | 9 | 50 | 9 | 59 |
| 14 | 55 | 9 | 55 | 10 | 40 |
| 15 | 50 | 12 | 50 | 9 | 63 |
| 16 | 50 | 12 | 50 | 20 | 53 |

4

**Revendication**

Procédé mettant en jeu un lit fluidisé de particules de matière thermoplastique en vue de préparer des mèches de fibres de carbone imprégnées de ladite matière thermoplastique, précurseur de matériaux composites ; lesdites mèches imprégnées étant d'une épaisseur inférieure à 5 mm, composées de 20 à 65 % en volume de fibres de carbone orientées et de ladite matière thermoplastique emplissant la totalité de l'espace entre les fibres ; dans lequel :

— après introduction dans ledit lit fluidisé de particules de matière thermoplastique, lesdites fibres de carbone, tendues entre deux contacts électriques, sont chauffées par Effet Joule, pendant une durée d'environ 0,5 à 60 s, à une température au moins égale à la température de collage de la matière thermoplastique,

— puis, lesdites fibres de carbone, revêtues de la matière thermoplastique sont sorties dudit lit fluidisé et soumises à un second chauffage par Effet Joule pendant une durée d'environ 0,10 à 60 s, à une température de l'ordre de grandeur de la température de fusion de la matière thermoplastique.

**Claim**

Process using a fluidized bed of thermoplastic material particles in order to prepare carbon fibers rows impregnated with said thermoplastic material, precursor of composite materials ; said impregnated rows having a thickness less than 5 mm, composed of 20 to 65 % in volume of oriented carbon fibers and of said thermoplastic material filling the whole space between the fibers ; wherein :

— after introduction in said fluidized bed of thermoplastic material particles, said carbon fibers, stretched between two electrical contacts, are heated by Joule effect, for a duration of about 0.5 to 60 secs at a temperature at least equal to the adhering temperature of the thermoplastic material ;

— then said carbon fibers coated with the thermoplastic material are brought out of said fluidized bed and subjected to a second heating by Joule effect for a duration of about 0.10 to 60 secs at about the same temperature as the melting temperature of the thermoplastic material.

**Patentanspruch**

Verfahren, bei welchem ein Fließbett von Teilchen aus thermoplastischem Material zur Herstellung von mit dem thermoplastischen Material imprägnierten Strängen aus Kohlenstoffasern als Präkursor von Verbundwerkstoffen zum Einsatz gelangt, wobei die imprägnierten Stränge eine Stärke von weniger als 5 mm haben und aus 20 bis 65 Vol.% orientierten Kohlenstoffasern und dem den gesamten Raum zwischen den Fasern ausfüllenden thermoplastischen Material zusammengesetzt sind, bei welchem Verfahren :

— nach Einbringen der Kohlenstoffasern in das Fließbett von Teilchen aus thermoplastischem Material, diese, zwischen zwei elektrischen Kontakten eingespannt, während einer Dauer von etwa 0,5 bis 60 s auf eine Temperatur, die mindestens gleich der Klebetemperatur des thermoplastischen Materials ist, mittels des Jouleschen Effekts erhitzt werden,

— und dann die mit dem thermoplastischen Material überzogenen Kohlenstoffasern aus dem Fließbett entfernt und einer zweiten Erhitzung mittels des Jouleschen Effekts während einer Dauer von etwa 0,10 bis 60 s auf eine Temperatur in der Größenordnung der Schmelztemperatur des thermoplastischen Materials unterzogen werden.